# EUROPEAN PATENT SPECIFICATION

(11) **EP 1 609 517 B1**
(45) Date of publication and mention of the grant of the patent: **01.04.2009**
(21) Application number: 05105183.7
(22) Date of filing: 14.06.2005
(51) Int. Cl.: B01D 25/26, B01D 25/30

(54) **Disposable integral filter unit**
Integrale Einwegfiltereinheit
Module de filtration jetable

(30) Priority: 17.06.2004 US 871694; 09.06.2005 US 148846
(43) Date of publication of application: 28.12.2005
(60) Divisional application: 08150281.7
(73) Proprietor: MILLIPORE CORPORATION, Billerica Massachusetts 01821 (US)
(72) Inventor: Straeffer, Gregory, North Chelmsfordm MA 01863 (US); Yavorsky, David P., Bolton, MA, 01740 (US); Decoste, Leonard D. Jr., Chelmsford, MA, 01824 (US); Stankowski, Ralph, Westford, MA, 01886 (US)
(74) Representative: Henkel, Feiler & Hänzel

(56) References cited:
- DE-A1- 1 942 543
- US-A- 3 241 678
- US-A- 3 647 084
- US-A- 5 069 791
- US-A- 5 429 742
- US-A- 5 965 019

## Description

### Field

In general, the present invention is directed to disposable filter units, and in particular, to a disposable integral filter unit through which fluid flows in "parallel" through a plurality of deep gradient filter packets.

### Background

Good manufacturing practices and governmental regulations are at the core of many biopharmaceutical manufacturing process. Such manufacturing processes must often undergo mandated, often lengthy and costly validation procedures.

For example, the equipment used for the separation and purification of biopharmaceutical products must, for obvious reasons, meet stringent cleanliness requirements. The cleaning validation of new or re-commissioned equipment (such as primary and secondary filtration units) may require as much as 50 test-swabs of exposed surfaces and subsequent biological assays of such test swabs. For a single piece of filtration equipment, the associated and reoccurring cost of a single cleaning validation may readily exceed multiple thousands of dollars.

To reduce such cleaning validation costs and expenses, and/or to reduce the occasions when cleaning is needed or required, the pharmaceutical and biotech industries are increasingly exploring pre-validated modular, disposable filtration solutions.

Along these lines, there is considerable interest of late in developing a disposable solution to the primary and/or secondary clarification of industrial volumes of raw, pharmaceutically synthesized fluids (*e*.*g*., cell cultures). The high-volume, high-throughput requirements of such filtration processes generally favor the use of costly, installed stainless steel filtration apparatus, wherein replaceable filter cassette or cartridges (e.g., typically comprising stacks of lenticular filter elements) are installed within a stainless steel housing or like receptacle. At the conclusion of a filtration operation, and removal of the spent cassette or cartridge, the apparatus has to be cleaned and validated, at considerable cost and effort, prior to being used again.

Need thus exists for a disposable filtration unit that can be pre-sterilized and pre-validated and that can perform primary and secondary clarifications, comparable in respect of volume and throughput as that afforded by and expected of conventional filtration processes, but with substantially reduced need for extensive fixed plumbing, equipment, and other like filtration hardware.

Although disposable integral filter units -- such as suggested in U.S. Pat. No. 5,429,742, issued to Richard G. Gutman et al. on July 4, 1995 -- have been disclosed, these and other known technologies cannot be used soundly for, or amenable easily towards, deep bed filtration (in general) and high-throughput, high-volume primary and/or secondary clarification (in particular).

US-A-5069791 discloses a filter apparatus having a plurality of filter elements that are disposed one above the other and have associated therewith at least one common unfiltered fluid channel and at least one common filtrate channel. Each filter element is made of metal and has at least one filter sheet, serves for the deposition of a cake layer formed from at least one filtering aid, and separates a filtrate collection area that opens into the filtrate channel from a filling space disposed above the filter sheet. Provided for each filter element is further an annular distribution space, which extends about the central axis of the filter, opens into the filling space at its outer periphery, and in the region of the central axis of the filter communicates with the unfiltered fluid channel. The filter elements are held between a fixed top cover and a vertically movable bottom cover that, for pressing the filter elements against one another to hold them together, cooperate with a hydraulically operated pressing mechanism.

US-A-3241678 discloses a further filter apparatus in which plural filter plates and frame members are alternately stacked upon each other and placed between rigid end members held in assembled relation by rods or struts on either side of the plates and frame members. Joined inlet passages in the various elements register and are connected with a supply pipe. The individual filter plates have filter layers attached to outer circumferential faces of a frame element surrounding an internal member composed of a material having drainage channels. The filter layers extend to the outer peripheral surfaces of the filter plates and the complete assembly is subsequently sealed at its peripheral zone so as to eliminate edge leakage.

### SUMMARY OF THE INVENTION

It is an object of the present invention to provide a disposable integral filter unit useful for the primary and/or secondary clarification of a pharmaceutical and like fluids.

To solve this problem the present invention provides a disposable integral filter unit as defined in claim 1. Preferred embodiments are defined in the dependent claims.

In response to the aforementioned need, the present invention provides a disposable integral filter unit 10 having an inlet 40 and an outlet 60, and comprising a plurality of filter plates 20n interposed between a pair of end plates 24,26. Each of the filter plates 20n comprises a thermoplastic framework 30 with a deep gradient filter packet 35 embedded therein. The filter plates and end plates are fused to form a substantially fixed, substantially water-tight, integral stack. Fluid entering the disposable integral filter unit 10 through said inlet 40 passes the deep gradient filter packet 35 of each filter plate 20n substantially contemporaneously prior to exiting said unit 10 through said outlet 60 (*cf*., "parallel" flow).

The "parallel" flow path through the embedded deep gradient filter packets 35 promotes use of the filter unit 10 for the primary and/or secondary clarification of, for example, biopharmaceutical fluids. In a preferred embodiment, the disposable integral filter unit 10 is comparatively small and compact - desirable structural characteristics that promote easier installation and handling as compared with the typical, bulkier units currently in widespread use. The filter unit is configured such that no external housing is required for its use in filtration. The filter unit 10 can be installed directly within a fluid process stream. When spent, the filter unit is removed and replaced with a fresh one.

In a particular embodiment of the present invention, the filter unit's polymeric framework 28: (a) is monolithic, (b) has an outer border, with interior-facing 214 and exterior-facing surfaces 217, circumscribing an internal area of said framework; and (c) provides a feed port 210, a filtrate port 212, and a filtration zone 216 within said exterior facing surface 214. A deep gradient filter packet 35 is embedded in the filtration zone 216. The packet 35 comprises strata or layers of filtration material stacked or otherwise deposited one against another to form a unitary pad-like composite. Depending on materials and manufacturing methodology, the composite is either self-supporting and/or unitized encapsulated within a porous outer envelope, sieve, or screen.

It is an aspect of the present invention to provide a disposable integral filter unit having incorporated therein several comparatively thick deep gradient filter packets, the packets embedded within the unit with minimized structural distortion.

It is another aspect of the present invention to provide a substantially water-tight filter unit useful for the primary and/or secondary clarification of, for example, biopharmaceutical fluids, without the requirement during said use of an external filter housing.

For further understanding of the nature and these and other objects of the present invention, reference should be had to the following description considered in conjunction with the accompanying drawings.

### Brief Description of the Drawings

The Figures provide schematic representational illustrations. The relative locations, shapes, and sizes of objects have been exaggerated to facilitate discussion and presentation herein.
Fig. is a diagrammatic view of a disposable integral filter unit 10 according to an embodiment of the present invention, the filter unit 10 comprising a stack of filter plates 20n, into each of which is embedded a deep gradient filter packet.
Fig. 2 is a diagrammatic view of a deep gradient filter packet 35, useful in the construction of a disposable integral filter unit.
Fig. 3a is a cross-sectional view of a single filter plate 20, useful in the construction of a disposable integral filter unit.
Fig. 3b is a cross-sectional view of paired filter plates 20_{I}, 20_{II}, useful in the construction of a disposable integral filter unit.
Fig. 3c is a top view of an embodiment of a filter plate 20, useful in the construction of a disposable integral filter unit.
Fig. 3d is a top view of another embodiment of a filter plate 20, useful in the construction of a disposable integral filter unit.
Fig. 4a is a top view of another embodiment of a filter plate 20, the embodiment made in accordance with a two-step molding and embedding process.
Fig. 4b is a cross-sectional view of the filter plate 20 illustrated in Fig. 4a, viewed along axis B-B.
Fig. 5 is a cross-sectional view of a particular embodiment of paired filter plates 20_{I}, 20_{II}, useful in the construction of a disposable integral filter unit.
Fig. 6 is a cross-sectional view of a disposable integral filter unit 10 according to a particular embodiment of the present invention, the filter unit 10 comprising a stack of filter plates 20n, into each of which is embedded a deep gradient filter packet 35.

### Detailed Description

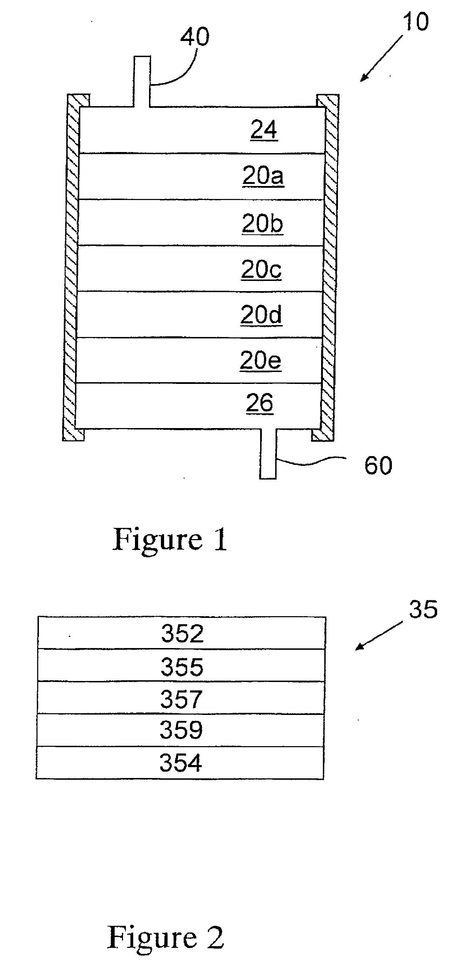

The present invention, as represented in Fig. 1, provides a disposable integral filter unit 10 having an inlet 40 and an outlet 60, and comprising a plurality of filter plates 20n interposed between a pair of end plates 24, 26. The disposable integral filter unit 10 is characterized particularly in that each of said filter plates 20n comprises a thermoplastic framework 28 and a deep gradient filter packet 35 embedded in said thermoplastic framework. Together, the filter plates 20n and end plates 24, 26 form a substantially fixed integral stack, arranged and configured such that fluid entering the disposable integral filter unit 10 through the inlet 40 passes the deep gradient filter packet 35 of each filter plate 20n substantially contemporaneously (*i.e*., in "parallel" ) prior to exiting the unit 10 through its outlet 60.

Among its advantages, the disposable integral filter unit 10 -- owing to its integral configuration -- eliminates the need for a fixed outer housing, such as the comparatively expensive stainless steel housings currently in widespread use. In this regard, the flow of fluid through the filter unit is substantially contained within its integral stack of plates -- a novel structural configuration that enables substantially water-tight construction. Depending though on one's particular application, a fixed outer housing may still be employed.

The disposable integral filter unit 10 can be implemented at a relatively low cost. In particular, the disposable integral filter unit 10 can be made as a "single use" item - *i*.*e*., "single use" in the sense that at the completion of the desired (or predetermined) fluid filtration operation, the filter unit 100 can either be disposed (e.g., as is sometimes required by law after filtering certain environmentally-regulated substances) or partially or completely revitalized or recycled (e.g., after filtering non-regulated substances).

The disposable integral filter unit enables comparatively high volume fluid clarification (*i*.*e*., so-called "primary clarification") at a throughput comparable to that accomplished by large filter units, yet in a smaller, more compact footprint. This functionality is attributed in part to the device's, novel configuration and utilization of plural deep gradient filter packets, arranged within the unit 10's "parallel flow" path, such that each packet contributes to unit's overall available membrane area. Preferred embodiments of the inventive filter unit 10 are intended for high volume filtration of fluid containing particle sizes in the range of approximately 10 microns to 100 microns.

Although the embodiment shown in Fig. 1 illustrates the filter unit 10 comprising filter plates 20a-n interposed in substantially normal relationship between end plates 24, 26, such configuration should not be construed as limiting. Other configurations are available. For example, the stack of filter plates 20a-n can be interposed between the end plates 24, 26 in a substantially orthogonal relationship. This can be accomplished for example, by placing suitable inlets and outlets on or proximate the edge surfaces of each filter plate 20, and configuring the end plates as a manifold with corresponding flows paths that mate appropriately with said inlets and outlets of said plates 20a-n. Other configurations can, of course, be considered by those skilled in the art in view of the present description.

Although it is expected that the filter unit 10 can be designed such that all that is needed to create a suitable water tight flow path from the inlet to the outlet are permanently-combined filter plates 20a-n and end plates 24, 26, for certain application, for example, involving comparatively high fluid pressures and temperatures, a more robust structure may be desirable. In such situations, one can cast onto the filter unit 10 an optional overmold 80 that jackets the outer surfaces of the filter plates 20a-n. The overmold 80 can, if desired, extend at least partially into the end plates 24 and 26 to clamp or otherwise fix those components. The overmold 80 can function, for example, to make the filter unit more robust (*cf*., water-tight) in the face of greater fluid pressures and/or temperatures.

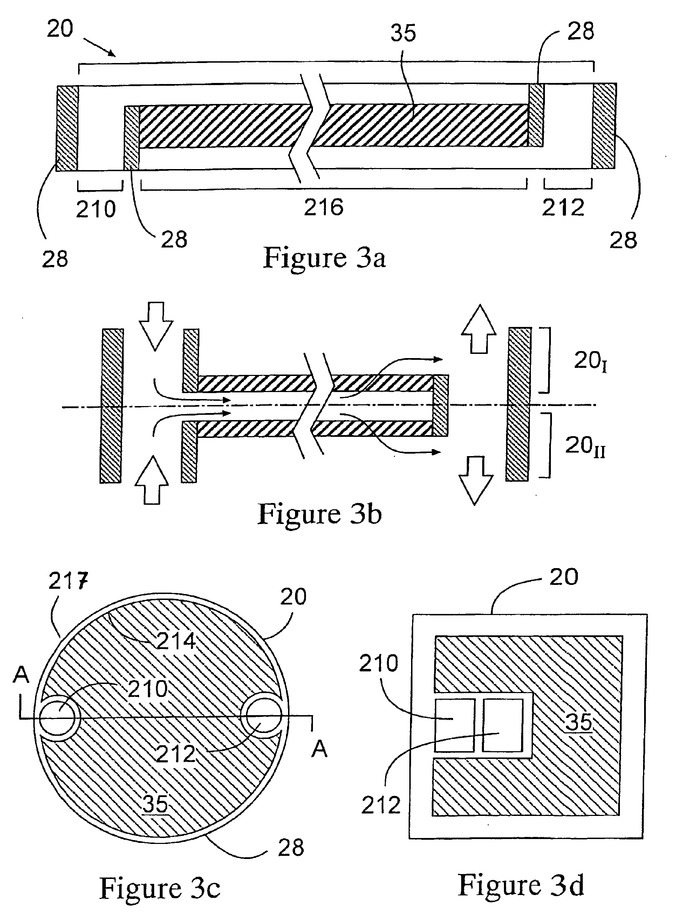

As stated, each of the filter plates 20n comprises a deep gradient filter packet 35 fixedly embedded within a polymeric, preferably plastic, more preferably thermoplastic framework 28. As seen in Fig. 3a, the polymeric framework 28 has a substantially flat, planar configuration, as does the deep gradient filter packet 35. Packet 35 is embedded within the polymeric framework 28 in substantially normal or co-planar orientation. The resultant filter plate thus assumes generally a slab-like configuratian well suited for stacking adjacently one atop another.

As shown in Figs. 3a, 3b, and 3c, regardless of its particular embodiment, the polymeric framework 28 is specifically structured to define at least three non-overlapping zones, *i*.*e*., a filtration zone 216, an inlet port zone 210, and an outlet port zone. The deep gradient filter packet 35 is embedded and "framed" within the polymeric framework 28 specifically within its filtration zone 216.

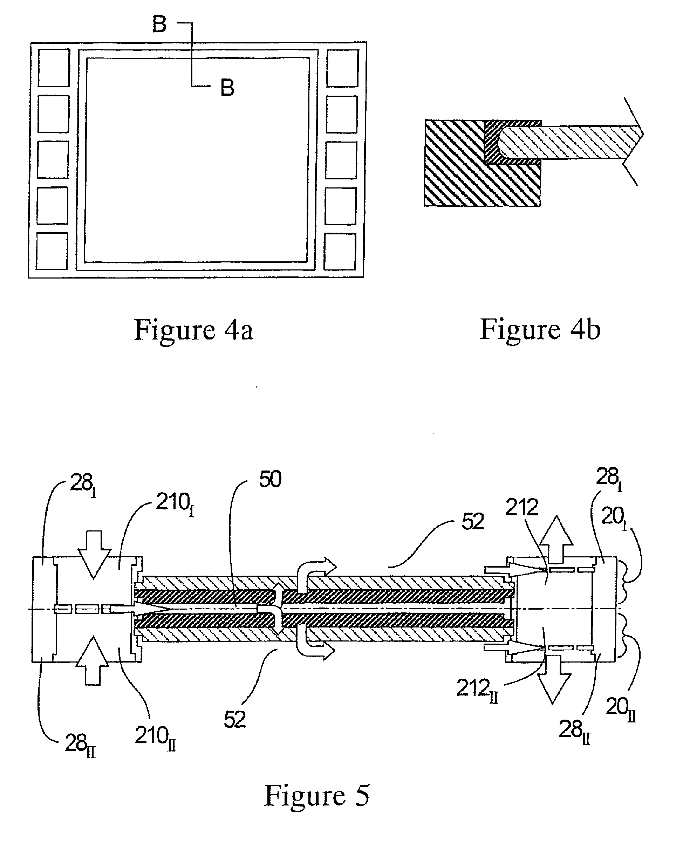

As shown in Figs. 3a, 3b, and 3c, there is no particular limitation as to the shape, relative positions, and sizes of zones 216, 210, and 220. In respect of shape and size, those skilled in the art can select shapes and sizes appropriate to the particular filtration sought. Although only single specific outlet and inlet port zones 210, 212 are shown in Figs. 3a, 3b, and 3c, a plurality of said zones can be employed if desired. See e.g., Fig. 4a.

Although in principal embodiments of the present invention the inlet and outlet zones are located opposite each other at far ends of the polymeric framework 28, with the filtration zone substantially centrally midway between the two (*see e.g.,* Figs. 3a and 3b), this is not a requirement. For example, as shown in Fig. 3c, it is possible to construct an operable filter plate 20, wherein the inlet port zone 210 and outlet port zone 212 are proximate each other and surrounded substantially by the filtration zone 216.

The structural extents of the polymeric framework 28 are bound by an outer wall having an outer wall surface 217 and an inner wall surface 214. In certain embodiments of the present invention, when a plurality of filter plates 20n are stacked together to form a filter unit 10, the outer wall surfaces 217 of each component polymeric framework 28 form collectively the exterior side surfaces of the filter unit 10. In certain principal embodiments of the present invention, the resultant composite outer wall of the filter unit 10 is sufficiently water tight, durable, and robust to enable filtration without use of an external housing.

The flow path through filter unit 10 is in large part determined by the structural configuration of the polymeric framework 28. In a typical arrangement, the stack of filter plate 20n comprises several pairs of filter plate 20n. As shown in Fig. 3b, in each pair, two identical filter plates 20_{I} and 20_{II} are brought together and united "back to back" in register. When fluid is introduced into said pair during the conduct of a filtration operation, fluid enters first into the combined inlet into the channel formed between the deep gradient filter packets. The fluid then passes through, and is filtered by, the deep gradient filter packet 35, then flows into the combined outlet port.

So-called "parallel flow filtration" (*i*.*e*., substantially contemporaneous flow through each component filter packet of the unit) can be accomplished by joining several of said pairs together such that all inlets and all outlets are aligned and in register. Although the use of pairs of filter plates -- and thus an even number of individual plates -- is preferred, those skilled in the art can appreciate that an operable fluid filtration flow path can be established using a single filter plate interposed between suitably-structured end plates. The present invention is thus not limited to whether pairs, even numbers, or odd numbers of plates are utilized. The present invention admits flexibility in such selection.

One useful embodiment of a filter plate pair is shown in Fig. 5. The filter plate pair therein comprises two identical filter plates 20_{I, II} that each comprise a polymeric framework 28_{I, II} defining a inlet port zone 210_{I, II}, an outlet port zone 212_{I, II}, and a filtration zone 216_{I, II} substantially therebetween. Deep gradient filter packets 35_{I, II} are embedded in the respective filtration zones 216_{I, II}. The filter plates 20_{I, II} are united to form a feed channel 50 between the filter packets 35_{I, II} and filtrate channels 52 outside the filter packets 35_{I, II}. The combined inlet port zones 210_{I, II} provide openings enabling fluid access immediately into the feed channel 50. Similarly, the combined outlet port zones 210_{I, II} provide openings that enable fluid access immediately out of the filtrate channels 52.

The deep gradient filter packet 35 embedded within the polymeric framework 28 is characterized by its thick stratified arrangement of (preferably fiber-based) filtration material. The strata or layers of filtration materials are stacked one against another forming a composite pad-like structure that -- depending on selected manufacturing technique - is either "self-supporting" or is unitized encapsulated within a porous outer envelope, sieve, or screen. Additionally, layers of cast membrane material or non-woven filter material may be used instead of the preferred fiber-based materials or in addition to such fiber-based materials as is known to one of skill in the art.

Each of the layers comprising the filter packet can be made of the same or different materials. However, each layer -- in respect of functionality -becomes progressively more retentive than the last, as one proceeds downstream through the packet. In an embodiment particularly useful for biopharmaceutical filtration, the upstream layer(s) provide a so-called "pre-filtration" function (*i*.*e*., approximately 25 to approximately 1 micron retention); the middle layer(s) provide a so-called "primary filtration" function (*i*.*e*., approximately 1 micron to approximately 0.3 micron retention); and the downstream layer(s) provide a so-called "fluid polishing" function (*i*.*e*., approximately 0.3 microns to approximately 0.1 micron retention).

Each layer or strata can be made of the same materials or different. Type of basic materials that can be employed for this purpose include polypropylene, polyester, glass, polyvinylchloride, polycarbonate polytetrafluoroethylene, polyvinylidene fluoride, cellulose, asbestos, nylon, polyethersulfone, and other polymeric (or non-polymeric) materials.

Aside from the basic materials, the filter materials and media disclosed in the following patents can also be considered: U.S. Pat. No. 4,645,567, issued to K.C. Hou et al. on February 24, 1987; U.S. Pat. No. 4,606,824, issued to C.K. Chu et al. on August 19, 1986; U.S. Pat. 4,511,473, issued to K.C. Hou on April 16, 1985; K.C. Hou 4,488,969, issued to K.C. Hou on December 18, 1984; U.S. Pat. No. 5,283,106, issued to K. Seller et al. on February 1, 1994; U.S. Pat. 4,661,255, issued to G. Aumann et al. on April 28, 1987; and U.S. Pat. No. 3,353,682, issued to D.B. Pall et al. on November 21, 1967.

Fibrous materials are generally preferred, because of their versatility, comparative ease of deposition, its strength imparting properties, internal surface to weight ratio, cost, and because fibers can be oriented in various positions and angles. Typical fibrous materials include glass and quartz, asbestos, potassium titanate, colloidal aluminum oxide, aluminum silicate, mineral wool, regenerated cellulose, microcrystalline cellulose, polystyrene, polyvinyl chloride, polyvinylidene chloride, polyacrylonitrile, polyethylene, polypropylene, rubber, polymers of terephthalic acid and ethylene glycol, polyamides, casein fibers, zein fibers, cellulose acetate, viscose rayon, hemp jute, linen, cotton, silk, wool, mohair, paper, metallic fibers such as iron, copper, aluminum, stainless steel, brass, silver, and titanium, and clays with acicular lath-like or needle-like particles, such as montmorillonite, sepiolite, palygorskite, and attapulgite clays of this type.

The present invention is not limited to any particular morphology for the layers constituting the pre-fltration zone. For example, in one embodiment, the material is formed as a pad of non-woven synthetic needle-felt, If polypropylene is used, the polypropylene is preferably "virgin" fiber. In other words, the fibers are essentially free of binders, finishing agents, and other adjuvants which often are added to or coated on polypropylene fibers during or after its formation. "Virgin" polypropylene essentially contains no additives other than those inherent in the synthesis of the polypropylene.

The formation of a filter pad or mat can be effected by various conventional techniques, of which mechanical, aerodynamic, or hydrodynamic web formation is used for natural and synthetic staple fibers and filaments and electrostatic formation for very fine denier fibers.

Spunbonded materials can be formed from melt-spun filaments of thermoplastics, e.g., polyethylene, polypropylene, polyamide, or polyester, which are substantially consolidated by needling, a shrinkage treatment, or by the addition of a binder. Advantage may be realized by the spunbonded process in which the filament-forming polymers are in one operation melt-spun and cooled in air streams, drawn and then directly laid in pad or mat form. Spunbonded non-wovens are often desirable for use as filter material on account of their commercial and qualitative advantages over other non-wovens.

For cellulose-based materials, one method of manufacture commences by first preparing a slurry comprising cellulose fibers, filter additives, and a polymeric thermoset binder. The slurry is vacuum felted and then cured at elevated temperature. The cationic resin, when cured, forms a permanent, interconnected rigid structure. The result is a composite structure having a tortuous structure of flow channels and comprising the filter additives embedded in a cellulose matrix,

The non-wovens used for manufacturing the filter are desirably used in the consolidated state. The materials can be consolidated in any conventional manner, for example by thermal bonding under pressure, in which the material is subjected to a calendering treatment, or by needling, or by thermal bonding using binders, such as hot-melt adhesives, for example in fiber or powder form, in which case the hot-melt adhesive must have a melting point which is lower than that of the fiber material of the web, or the pre-consolidation can be effected using a combination of the aforementioned measures.

The filter material under certain circumstances can benefit by the incorporation of non-fiber additives, *i*.*e*., so-called "filter aids". These can be incorporated by use of suitable anionic, cationic, or nonionic binding resins. Examples of additives include, but are not limited to, acid-washed diatomaceous earth, perlite, fumed precipitated silica (for hydrophobic absorption); and activated carbon (for absorption certain hormones and pyrogens).

Membranes such as cast or non-woven or stretched microporous membranes are useful as one or more of the final layers (0.45 or 0.2 micron pore size) providing higher retention of impurities as the material flows through the deep bed packet 35. Suitable materials for such membranes include but are not limited to celluloses, including regenerated cellulose and mixed esters of cellulose, polyvinylidene fluoride, polysulfone, polyethersulfone, polyarylsulfone, nylons, polyester, polycarbonate, polystyrene, PTFE resin, polypropylene, polyethylene and the like. Examples of commercially available and suitable materials are a mixed ester cellulosic product known as RW membrane, a PVDF membrane known as Durapore® membrane and a PES membrane known as the Millipore Express® membrane, all available from Millipore Corporation of Billerica, Massachusetts.

The incorporation of the deep gradient filter packet 35 into a polymeric framework 28 is preferably accomplished by injection molding. While conventional injection molding methodologies can be used for certain applications, the well-documented post-formation, pre-curing structural instabilities of many thermoplastic materials (e.g., shrinkage) can have an unintended influence on the structural integrity of the incorporated filtration material. For example, if the density gradient filter packet 35 sought to be incorporated is of a type engineered to enable high resolution separations (such as common in biopharmaceutical fluid separations), even a slight structural permutation of the surrounding polymeric framework 28, even if short lived and temporary, can compromise unacceptably the structural integrity of said filter packet 35. Certain thermoplastic raw material, as the case also with large bulky frame formats, can produce such severe structural contortions during curing that the structural and functional integrity of even robust density gradient filter packets would not be immune from such influences.

In the present invention, the polymeric framework 28 affords greater functionality, if designed sufficiently thick to withstand the force of internal pressure during operation of the completed device. However, the more thickly molded the frame, the greater the inclination for it to shrink. Concerns over distortion and shrinkage can also limit material selection.

To counter such manufacturing issues, when relevant, one can use a two-step molding process wherein a substantial first portion of the frame is made and allowed to shrink to its natural state, with the remaining lesser portion molded during or contemporaneously with the embedding of the deep gradient filter packet. More particularly, a two-step molding process comprises the steps of: (a) forming by molding a substantial first portion of said polymeric framework from a thermoplastic polymer, said outer first portion providing at least said filtration zone; (b) placing said deep gradient filter packet in said filtration zone; and (c) forming by molding a remaining lesser second portion of said polymeric framework from said thermoplastic polymer, said second portion completing said polymeric framework and embedding said deep gradient filter packet in place.

The advantages of the two-step molding process flows principally from the stabilizing, bracing effect provided by the first formed portion. As the thermoplastic material of the second formed portion cools (or otherwise hardens), shrinkage or warping will likely occur, but will be much more limited in view of the spatial constraints imposed by the dimensionally-stabilized first portion and its comparatively smaller mass. The density gradient filter packet 35 thus becomes embedded robustly within the polymeric framework, under conditions that are comparatively gentle and thus less likely to compromise its structural and functional integrity.

Further details regarding the two-step molding process used for embedding the deep gradient filter packet 35 is described in U.S. Pat. App. 10/870,802 filed on even date herewith, entitled "Method for the Manufacture of a Composite Filter Plate ".

While thermoplastic materials have been highlighted in the above example for use in forming the polymeric framework 28, other materials such as thermosets and rubbers may also be used as part or all of the framework if desired or required by the application and as are described below.

A representative example of a deep gradient filter packet 35 is shown in Fig. 3. The deep gradient filter packet 35 comprises a plurality of adjacent filter layers 355, 357, and 359 interposed between screens 352 and 354, the retention of each said filter layer being greater than (*i*.*e*., more selective) than the layer preceding it. More particularly, the deep gradient filter packet is composed as follows:

| Component | Material | Thickness (in.) | Permeability (LMH/kPa) |
|---|---|---|---|
| Screen 352 | Polypropylene extruded diagonal weave screen | 0.022 | -- |
| Filter Layer 355 (DE50) | Wet-laid pad comprising cellulose wood pulp and diatomaceous earth | 0.13 | 261.07 (1800 (LMH/psi)) |
| Filter Layer 357 (DE75) | Wet-laid pad comprising cellulose wood pulp and diatomaceous earth | 0.13 | 43.51 (300 (LMH/psi)) |
| Membrane 351 (RW01) | Mixed esters of cellulose, microporous membrane, nominal 0.1 micron pore size | 0.009 | 29 (200 (LMH/psi)) |
| Screen 354 | Polypropylene extruded diagonal weave screen | 0.022 | -- |

In the preferred assembly of the disposable integral filter unit 10, each of the aforementioned pre-bonded filter plate pairs are sequentially brought together, positioned into appropriate register, then permanently bonded together, forming water-tight seals. After the stack is completed, the end caps 24 and 26 are positioned on the downstream and upstream sides of the stack, respectively, and permanently bonded in a manner that forms water-tight seals. The permanent bonds can be accomplished by use of, for example, mechanical couplers, adhesives, thermal sealing, and the like.

In respect of thermal sealing procedures -- particularly for the assembly of embodiments of the type illustrated in Fig. 4a -- vibration welding provides particularly good results with thermoplastic materials.

Vibration welding and the several variants thereof are well known technologies. During vibration welding, the components to be fused are at certain predesignated points of contact made to vibrate at frequencies, for example, in excess of 20,000 cycles per second (*i*.*e*., 20Hz). Intense heat is generated in a matter of microseconds to melt the thermoplastic material and weld the layers at said points of contact. Vibration welding is preferred over other thermal welding process as the generated heat is comparatively narrowly localized and is quickly dissipated, thus eliminating the necessity of elaborate and/or costly heat removal systems.

Vibration welding is the preferred method for thermally bonding rectangular, "un-jacketed" configurations of the inventive filter unit. This configuration consists essentially of several rectangular filter plates (e.g., of the type shown in Fig. 4a) interposed integrally between a pair of end plates. The integral rectangular filter plates are constructed and bonded between the end plates to eliminate any need for, desire for, or advantage of using an outer jacket. Thermoplastic materials exhibiting high dimensional stability (e.g., glass filled polypropylene or polysulfone) are the preferred materials for such embodiment. In respect of the economic considerations relevant to "disposability", it will be appreciated that the generally higher costs of using glass-filled thermoplastic materials is offset by the lower costs associated with vibration welding, combined with the elimination of a jacket over-molding step.

The resultant "un-jacketed" filter unit can be used for filtration of industrial volumes of fluids in either a vertical or horizontal position with comparatively minimal housing and installation requirements. The use of common compression plates, inlets, outlets, and associated flow controls would likely be all that is structurally needed in respect of installation.

Three variants of vibration welding useful for fusing all or some of the components envisioned herein (particular in the construction of rectangular "un-jacketed" vertical or horizontal filter units) are: Angular welding (using frequencies up to 100 Hz, and angles up to 15 degrees); linear welding (using frequencies of 100 to 300 Hz and amplitudes of 0.5 to 2.5 mm); and biaxial oscillating motions (using frequencies of 80 to 250 Hz, and amplitudes up to 0.7 mm).

Alternative methods for bonding components together may also be used such as radiant heating, adhesive bonding, solvent bonding, mechanical means such as clamps, screws and nuts, rivets (plastic or metal) or curable materials such as thermosets.

As indicated, the end caps 24 and 26 seal off the upstream and downstream ends of the stack of filter plates. They are generally made of the same polymeric materials as the polymeric framework of the filter plates, and can be molded or cast as a singly unitary monolithic piece or can be a conglomerate of assembled pieces. Preferably, the end caps 24 and 26 will have integrally formed thereon the filter unit's inlet 40 and outlet 60, respectively.

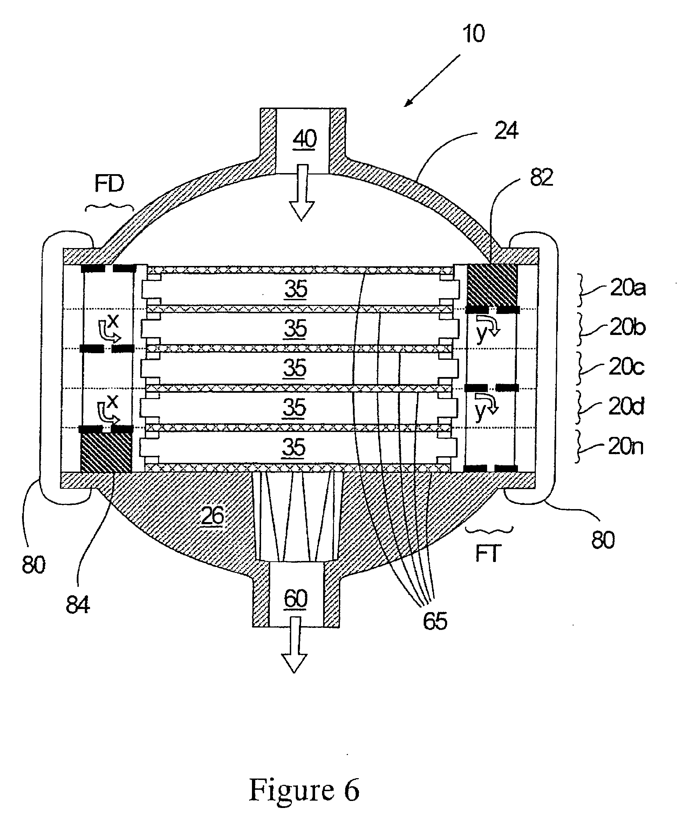

Port plugs can also be used, as appropriate, to plug or otherwise block the upstream and downstream ends of the feed and filtrate lines running orthogonally through the stack of the filter plates 20n. See e.g., Fig. 6. The port plugs can be formed integrally as part of the end caps 24 and 26, or can exist as independent components that can later in construction be positioned to abut against the endplates 24 and 26, and thereby -- like a cork -- plug forcibly into the opening of the feed and filtrate lines.

The materials and structural assemblage of the port plugs, end caps 24, 26, and the polymeric framework 28 should be selected with an eye towards promoting the disposability and the integral character sought by the invention. Toward these objectives, the structural and/or rigid filter unit components -- essentially all components, excepting the filter materials -- should generally be formed monolithically (*i*.*e*., as a single, homogenous, unitary, unassembled piece) from polymeric material, for example, by well-known injection molding processes.

Examples of generally suitable polymeric material include, but are not limited to, polycarbonates, polyesters, nylons, PTFE resins and other fluoropolymers, acrylic and methacrylic resins and copolymers, polysulphones, polyethersulphones, pofyaryl-sulphones, polystyrenes, polyvinyl chlorides, chlorinated polyvinyl chlorides, ABS and its alloys and blends, polyolefins (e.g., low density polyethylene, high density polyethylene, and ultrahigh molecular weight polyethylene and copolymers thereof), polypropylene and copolymers thereof, and metallocene generated polyolefins as well as thermosets, rubbers and other curable polymeric materials such as polyurethanes, epoxies, synthetic rubbers such as silicones and the like.

Fig. 6 illustrates an embodiment of a disposable integral filter unit 10 according to the present invention. The disposable integral filter unit 10 comprises a plurality of cylindrical filter plates 20a-n interposed between end plates 24 and 26. End plate 24 (having a shell-like configuration) and end plate 26 (having a solid configuration) has integrally formed therein an inlet 40 and outlet 60, respectively. An outer jacket 80, over-molded onto the stack of plates, "hooks" onto the outer rims of each of end plates 24 and 26. The filter plates 20*a*-*n* are configured and arranged to provide feed channels "*x*" and filtrate channels "*y*" leading to and away from each of the deep gradient filter packet 35 embedded within each plate. The feed channels "*x*" are in "communication" immediately with the core feed line FD passing orthogonally through plates; flow at the furthest end of the core feed line FD being obstructed by port plug 84. The filtrate channels are in "communication" immediately with the core filtrate line FT passing orthogonally through the plates; backflow into the upper regions of the core filtrate line FT being obstructed by port plug 82. Screen material 65 -- such as an "open-mesh" polypropylene screen of approximately 5.08 mm (0.2 inch) to approximately10.16 mm (.040 inch) thickness -- is used in both the feed channels "*x*" and filtrate channels "*y*".

## Claims

1. A disposable integral filter unit (10) having an inlet (40) and an outlet (60), and comprising a plurality of filter plates (20n) interposed between a pair of end plates (24,26);
wherein each of said filter plates (20n) comprises a thermoplastic framework (28) and a deep gradient filter packet (35) embedded in said thermoplastic framework (28);
wherein the filter plates (20n) and end plates (24,26) are formed of thermoplastic and are fused together to form a substantially fixed integral stack, said substantially fixed integral stack being substantially water-tight from said inlet (40) to said outlet (60) so that fluid entering the disposable integral filter unit (10) through said inlet (40) passes the deep gradient filter packet (35) of each filter plate (20n) substantially contemporaneously prior to exiting said unit through said outlet (60); and
wherein each filter plate (20n) is manufactured through a two-step embedding process, said two step process comprising the steps of:
(a) forming by molding a substantial first portion of said thermoplastic framework (28) from a thermoplastic material, said first portion providing at least a filtration zone (216);
(b) placing said deep gradient filter packet (35) in said filtration zone (216); and
(c) forming by molding a remaining lesser second portion of said thermoplastic framework (28) from said thermoplastic material, said second portion completing said thermoplastic framework (28) and embedding said deep gradient filter packet (35) in place.

2. The disposable integral filter unit of claim 1, wherein the deep gradient filter packet (35) comprises a plurality of layers of filtration material, the permeability of the first filtration layer being greater than the permeability of the last filtration layer.

3. The disposable integral filter unit of claim 2, wherein the deep gradient filter packet (35) comprises three layers of filtration material, and wherein:
(a) the first layer of filtration material is composed of cellulose and diatomaceous earth, and has a permeability of approximately 261.07 LMH/kPa (1800 LMH/psi);
(b) the second layer of filtration material is composed of cellulose and diatomaceous earth, and has a permeability of approximately 43.51 LMH/kPa (300 LMH/psi); and
(c) the third layer of filtration material is a microporous membrane, and has a permeability of approximately 29 LMH/kPa (200 LMH/psi).

4. The disposable integral filter unit of any one of claims 1 to 3, wherein the thermoplastic framework (28) is:
(a) monolithic;
(b) has a wall, with interior-facing and exterior-facing surfaces (214,217), that bounds an internal area of said framework (28);
(c) provides a feed port (210), a filtrate port (212), and the filtration zone (216) within said exterior facing surface (217).

5. The disposable integral filter unit of any one of claims 1 to 3, wherein the thermoplastic framework (28) is monolithic, substantially rectangular, and provided with ports.

6. The disposable integral filter unit of any one of claims 1 to 5, wherein said plurality of filter plates (20n) are adjacently fused.

7. The disposable integral filter unit of claim 6, wherein said adjacently fused filter plates (20n) are adjacently fused by vibration welding.

8. The disposable integral filter unit of any one of claims 1 to 7, wherein said thermoplastic framework is formed from a glass-filled thermoplastic material, preferably of glass-filled polypropylene or glass-filled polysulfone.

9. The disposable integral filter unit of any one of claims 1 to 8, further comprising a durable outer jacket fixedly covering the exterior-facing surfaces of said filter plates (20n) and fixedly holding said end plates (24,26).

## Patentansprüche

1. Eine integrale Einwegfiltereinheit (10) mit einem Einlaß (40) und einem Auslaß (60) und mit mehreren Filterplatten (20n), die zwischen ein Paar von Endplatten (24,26) eingefügt sind,
wobei jede der Filterplatten (20n) einen thermoplastischen Rahmen (28) und ein in dem thermoplastischen Rahmen (28) eingebettetes Gradienten-Tiefenfilterpaket (35) aufweist,
wobei die Filterplatten (20n) und die Endplatten (24,26) aus einem thermoplastischen Material gebildet und zur Bildung eines im wesentlichen festen integralen Stapels zusammengeschmolzen sind, wobei der im wesentlichen feste integrale Stapel von dem Einlaß (40) zu dem Auslaß (60) im wesentlichen wasserdicht ist, so dass in die integrale Einwegfiltereinheit (10) durch den Einlaß (40) eintretendes Fluid das Gradienten-Tiefenfilterpaket (35) jeder Filterplatte (20n) im wesentlichen gleichzeitig durchtritt, bevor es die Einheit durch den Auslaß (60) verlässt, und
wobei jede Filterplatte (20n) durch einen zweistufigen Einbettungsprozeß hergestellt ist und der zweistufige Prozeß die folgenden Schritte umfasst:
(a) Ausbilden eines im wesentlichen ersten Abschnitts des thermoplastischen Rahmens (28) aus einem thermoplastischen Material durch Formen bzw. Gießen, wobei der erste Abschnitt zumindest eine Filterzone (216) bietet,
(b) Anordnen des Gradienten-Tiefenfilterpakets (35) in der Filterzone (216), und
(c) Ausbilden eines verbleibenden geringeren zweiten Abschnitts des thermoplastischen Rahmens (28) aus dem thermoplastischen Material durch Formen bzw. Gießen, wobei der zweite Abschnitt den thermoplastischen Rahmen (28) vervollständigt und das Gradienten-Tiefenfilterpaket (35) einbettet.

2. Die integrale Einwegfiltereinheit gemäß Anspruch 1, wobei das Gradienten-Tiefenfilterpaket (35) mehrere Lagen von Filtermaterial umfasst, wobei die Permeabilität der ersten Filterlage größer ist als die Permeabilität der letzten Filterlage.

3. Die integrale Einwegfiltereinheit gemäß Anspruch 2, wobei das Gradienten-Tiefenfilterpaket (35) drei Lagen von Filtermaterial umfasst, und wobei:
(a) die erste Lage des Filtermaterials aus Zellulose und Kieselerde aufgebaut ist und eine Permeabilität von etwa 261,07 LMH/kPa (1800 LMH/psi) besitzt,
(b) die zweite Lage des Filtermaterials aus Zellulose und Kieselerde aufgebaut ist und eine Permeabilität von etwa 43,51 LMH/kPa (300 LMH/psi) besitzt und
(c) die dritte Lage des Filtermaterials eine mikroporöse Membran ist und eine Permeabilität von etwa 29 LMH/kPa (200 LMH/psi) besitzt.

4. Die integrale Einwegfiltereinheit gemäß einem der Ansprüche 1 bis 3, wobei der thermoplastische Rahmen (28):
(a) monolithisch ist,
(b) eine Wand aufweist, mit nach innen und nach außen gerichteten Oberflächen (214,217), die einen internen Bereich des Rahmens (28) umgibt,
(c) einen Zuführanschluß (210), einen Filtratanschluß (212) und die Filterzone (216) in der nach außen gerichteten Oberfläche (217) vorsieht.

5. Die integrale Einwegfiltereinheit gemäß einem der Ansprüche 1 bis 3, wobei der thermoplastische Rahmen (28) monolithisch, im wesentlichen rechteckig und mit Anschlüssen versehen ist.

6. Die integrale Einwegfiltereinheit gemäß einem der Ansprüche 1 bis 5, wobei die mehreren Filterplatten (20n) angrenzend verschmolzen sind.

7. Die integrale Einwegfiltereinheit gemäß Anspruch 6, wobei die angrenzend verschmolzenen Filterplatten (20n) angrenzend durch Vibrationsschweißen verschmolzen sind.

8. Die integrale Einwegfiltereinheit gemäß einem der Ansprüche 1 bis 7, wobei der thermoplastische Rahmen aus einem mit Glas verstärkten thermoplastischen Material, vorzugsweise aus mit Glas verstärktem Polypropylen oder mit Glas verstärktem Polysulfon ausgebildet ist.

9. Die integrale Einwegfiltereinheit gemäß einem der Ansprüche 1 bis 8, ferner mit einem haltbaren äußeren Mantel, der die nach außen gerichteten Oberflächen der Filterplatten (20n) fest umgibt und die Endplatten (24,26) festhält.

## Revendications

1. Unité de filtre intégrale jetable (10) ayant une entrée (40) et une sortie (60), et comportant de multiples plaques de filtre (20n) interposées entre deux plaques d'extrémité (24, 26) ;
dans laquelle chacune desdites plaques de filtre (20n) comporte un cadre (28) en matière thermoplastique et un paquet formant filtre (35) à gradient fort encastré dans ledit cadre (28) en matière thermoplastique ;
dans laquelle les plaques de filtre (20n) et les plaques d'extrémité (24, 26) sont formées d'une matière thermoplastique et sont soudées ensemble pour former un empilage intégral sensiblement fixe, ledit empilage intégral sensiblement fixe étant sensiblement étanche à l'eau de ladite entrée (40) à ladite sortie (60) afin qu'un fluide entrant dans l'unité de filtre intégrale jetable (10) à travers ladite entrée (40) franchisse le paquet formant filtre à gradient fort (35) de chaque plaque de filtre (20n) sensiblement en même temps avant de sortir de ladite unité à travers ladite sortie (60) ; et
dans laquelle chaque plaque de filtre (20n) est fabriquée par un processus d'emboutissage en deux étapes, ledit processus en deux étapes comprenant les étapes qui consistent :
(a) à former par moulage une première partie substantielle dudit cadre (28) en matière thermoplastique à partir d'une matière thermoplastique, ladite première partie procurant au moins une zone de filtration (216) ;
(b) à placer ledit paquet formant filtre à gradient fort (35) dans ladite zone de filtration (216) ; et
(c) à former par moulage une seconde partie restante plus petite dudit cadre (28) en matière thermoplastique à partir de ladite matière thermoplastique, ladite seconde partie complétant ledit cadre (28) en matière thermoplastique et encastrant en place ledit paquet formant filtre (35) à gradient fort.

2. Unité de filtre intégrale jetable selon la revendication 1, dans laquelle le paquet formant filtre (35) à gradient fort comporte de multiples couches de matière de filtration, la perméabilité de la première couche de filtration étant supérieure à la perméabilité de la dernière couche de filtration.

3. Unité de filtre intégrale jetable selon la revendication 2, dans laquelle le paquet formant filtre (35) à gradient fort comporte trois couches de matière de filtration, et dans laquelle :
(a) la première couche de matière de filtration est composée de cellulose et de terre de diatomée, et a une perméabilité d'environ 261,07 LMH/kPa (1800 LMH/psi) ;
(b) la deuxième couche de matière de filtration est composée de cellulose et de terre de diatomée, et a une perméabilité d'environ 43,51 LMH/kPa (300 LMH/psi) ; et
(c) la troisième couche de matière de filtration est une membrane microporeuse, et a une perméabilité d'environ 29 LMH/kPa (200 LMH/psi).

4. Unité de filtre intégrale jetable selon l'une quelconque des revendications 1 à 3, dans laquelle le cadre (28) en matière thermoplastique :
(a) est monolithique ;
(b) comporte une paroi, avec des surfaces (214, 217) tournée vers l'intérieur et tournée vers l'extérieur, qui délimite une zone intérieure dudit cadre (28) ;
(c) forme un orifice d'alimentation (210), un orifice de filtrat (212) et la zone de filtration (216) à l'intérieur de la surface (217) tournée vers l'extérieur.

5. Unité de filtre intégrale jetable selon l'une quelconque des revendications 1 à 3, dans laquelle le cadre (28) en matière thermoplastique est monolithique, sensiblement rectangulaire et pourvu d'orifices.

6. Unité de filtre intégrale jetable selon l'une quelconque des revendications 1 à 5, dans laquelle lesdites multiples plaques de filtre (20n) sont soudées de façon adjacente.

7. Unité de filtre intégrale jetable selon la revendication 6, dans laquelle lesdites plaques de filtre (20n) soudées de façon adjacente sont soudées de façon adjacente par soudage par vibration.

8. Unité de filtre intégrale jetable selon l'une quelconque des revendications 1 à 7, dans laquelle ledit cadre en matière thermoplastique est formé d'une matière thermoplastique chargée de verre, de préférence du propylène chargé de verre ou de la polysulfone chargée de verre.

9. Unité de filtre intégrale jetable selon l'une quelconque des revendications 1 à 8, comportant en outre une chemise extérieure résistante recouvrant fixement les surfaces tournées vers l'extérieur desdites plaques de filtre (20n) et maintenant fixement lesdites plaques d'extrémité (24, 26).
